Europäisches Patentamt

European Patent Office

Office européen des brevets

(11) Publication number: **0 207 462**
A2

# EUROPEAN PATENT APPLICATION

(21) Application number: 86108778.1

(22) Date of filing: 27.06.86

(51) Int. Cl.⁴: **G 06 F 7/02**

(30) Priority: 28.06.85 JP 142272/85

(43) Date of publication of application:
07.01.87 Bulletin 87/2

(84) Designated Contracting States:
DE FR GB NL

(71) Applicant: NEC CORPORATION
33-1, Shiba 5-chome, Minato-ku
Tokyo 108(JP)

(72) Inventor: Yasumoto, Masaaki
c/o NEC Corporation 33-1, Shiba 5-chome
Minato-ku Tokyo(JP)

(72) Inventor: Enomoto, Tadayoshi
c/o NEC Corporation 33-1, Shiba 5-chome
Minato-ku Tokyo(JP)

(74) Representative: Glawe, Delfs, Moll & Partner
Patentanwälte
Postfach 26 01 62 Liebherrstrasse 20
D-8000 München 26(DE)

(54) Comparator circuit.

(57) A comparator circuit of easily expandable form is constructed of two first circuits for comparing the bit data of two digital words, and a judgement circuit which outputs comparison signals in response to the outputs of the two first comparator circuits. The aforementioned circuits constitute the basic building block of the comparator circuit. Expandability is provided by replacing the first comparator circuits with the basic building block circuits, and by then replacing the first comparator circuits of the added basic building block circuits with further basic building block circuits, etc. The comparator circuit thus formed is advantageous in that the number of cascade levels increases no faster than nN, where N is the number of bits to be compared.

FIG. 4

1

# COMPARATOR CIRCUIT

## BACKGROUND OF THE INVENTION

The present invention relates to a comparator circuit usable with a control circuit for a servomotor, a digital signal processing circuit, or the like, for comparing the magnitude of two positive binary input signals.

The conventional comparator circuit is constructed in accordance with the following algorithm. Two input signals are denoted by X and Y, and a signal which takes a "1" level only when the input signal X is equal to or larger than the input signal Y is denoted by F. Suffixes attached to the letters X, Y and F denote the bit numbers. First, the minimum bits $X_1$ and $Y_1$ of the input signals are compared, and the comparison result signal $F_1 = \overline{X}_1 \cdot Y_1$ is outputted. Subsequently, comparisons of the higher bits are sequentially conducted in accordance with the following recurring equation:

$$F_i = \overline{X}_i \cdot Y_i + (\overline{X_i + Y_i})F_{i-1} \quad (i > 1) \quad \dots \quad (1)$$

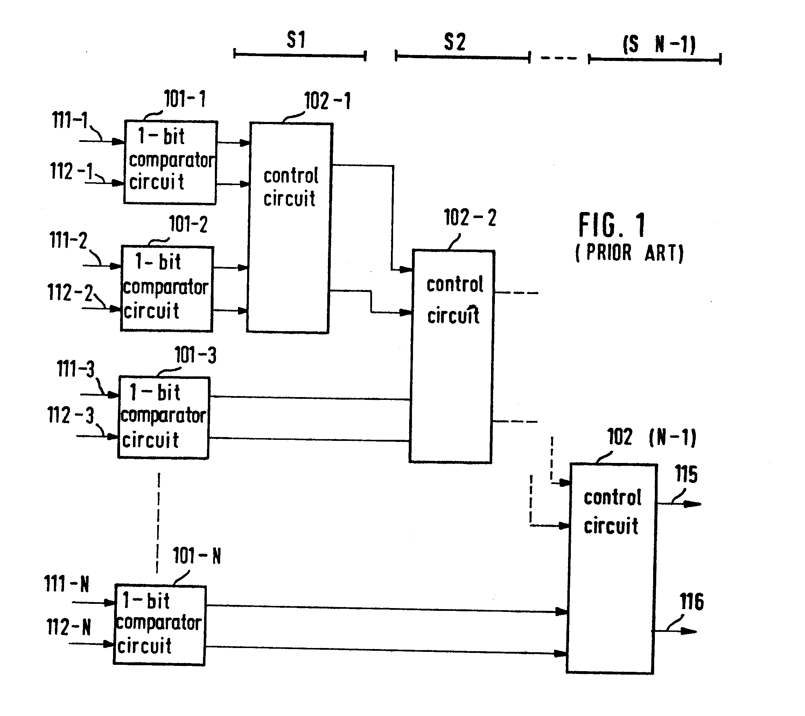

One example of this circuit is shown in Fig. 1.

The input signal $X_i$ (i = 1 to N, $X_N$: the maximum bit) is inputted to the input terminal 111-i of a 1-bit comparator circuit 101-i (i = 1 to N), and the input signal $Y_i$ (i = 1 to N, $Y_N$: the maximum bit) is inputted to the input terminal 112-i. First, for the respective bits, the magnitude comparisons are conducted at the 1-bit comparator circuits 101-1 to 101-N. Next, in accordance with equation (1), the comparison results of the 1-bit comparator circuits are referred sequentially, beginning with the lower bits, by control circuits 102-1 to 102-(N-1), as to whether or not the signals $X_i$ and $Y_i$ are equal. Finally, a magnitude comparison signal or an equality signal is outputted from the output terminals 115 and 116 of the control circuit 102-(N-1) as a comparison result signal. The above process is generally known as the "parallel comparator circuit process" and is widely used.

Despite this fact, however, the conventional comparator circuit has its operational time period elongated with an increase in the bit number, because it operates according to the above recurring equation. In a signal processor having a large bit number (e.g., 16 or 32 bits), therefore, it has been very difficult to provide a high-speed comparator circuit.

SUMMARY OF THE INVENTION

An object of the present invention is to provide a comparator circuit operable at high speed.

Another object of the present invention is to provide a simplified comparator circuit.

According to the present invention, there is provided a comparator circuit for comparing two digital words of a plurality of bits including a basic circuit comprising (a) two first circuits for comparing bit data of the same bit number of the two digital words and generating a comparison signal, and (b) a second circuit, responsive to the comparison signal from the two first circuits, for generating a comparison result signal in response to the data supplied thereto, the first circuit being replaced with the basic circuit in accordance with the number of bits of the two digital words.

Other objects and features of the present invention will be clarified from the following description with reference to the drawings.

## BRIEF DESCRIPTION OF THE DRAWINGS

Fig. 1 shows a conventional comparator circuit;

Fig. 2 shows a 2-bit comparator circuit constituting the fundamental component of the present invention;

Fig. 3 shows a 3-bit comparator circuit according to the present invention;

Fig. 4 shows a 4-bit circuit according to the present invention; and

Figs. 5 to 9 show embodiments of the present invention, respectively.

## DETAILED DESCRIPTION OF THE PREFERRED EMBODIMENTS

The present invention will be described in detail in the following with reference to the accompanying drawings.

- 4 -

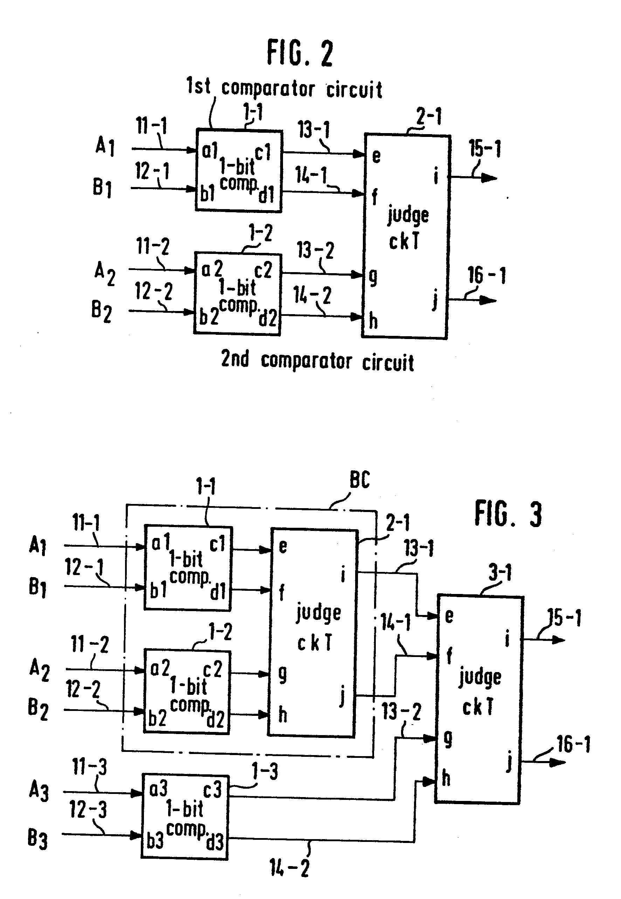

Fig. 2 is a basic comparator circuit constituting a fundamental element of the present invention. Reference numeral 1-1 denotes a first comparator circuit which is equipped with first and second input terminals a1 and b1 connected to signal lines 11-1 and 12-1, respectively, and first and second output terminals c1 and d1. Numeral 1-2 denotes a second comparator circuit which is equipped with third and fourth input terminals a2 and b2 connected to signal lines 11-2 and 12-2, respectively, and third and fourth output terminals c2 and d2. Numeral 2-1 denotes a judging circuit. This judging circuit is equipped with fifth to eighth input terminals, of which: the fifth input terminal e is connected with the first output terminal c1 of the first comparator circuit 1-1 via a signal line 13-1; the sixth input terminal f is connected with the second output terminals d1 of the circuit 1-1 via a signal line 14-1; the seventh input terminal g is connected with the third output terminal c2 of the second comparator circuit 1-2 via a signal line 13-2; and the eighth input terminal h is connected with the fourth output terminal d2 of the circuit 1-2 via a signal line 14-2.

Table 1

| | Input Terminals | | Output Terminals | |
|---|---|---|---|---|
| | a | b | c | d |
| Values of Terminals | 0 | 0 | 0 | 1 |
| | 0 | 1 | 0 | 0 |
| | 1 | 0 | 1 | 0 |
| | 1 | 1 | 0 | 1 |

Table 2

| | Input Terminals | | | | Output Terminals | |
|---|---|---|---|---|---|---|
| | e | f | g | h | i | j |
| Values of Terminals | 0 | 0 | 0 | 0 | 0 | 0 |
| | 0 | 0 | 0 | 1 | 0 | 0 |
| | 0 | 0 | 1 | 0 | 0 | 0 |
| | 0 | 1 | 0 | 0 | 0 | 0 |
| | 0 | 1 | 0 | 1 | 0 | 1 |
| | 0 | 1 | 1 | 0 | 1 | 0 |
| | 1 | 0 | 0 | 0 | 1 | 0 |
| | 1 | 0 | 0 | 1 | 1 | 0 |
| | 1 | 0 | 1 | 0 | 1 | 0 |

The operations of the circuits 1-1, 1-2 and 2-1 and the basic comparator circuit of Fig. 1 will be described in the following. The circuits 1-1 and 1-2 perform absolutely the same operations. Table 1 enumerates the relations of the logical values of the input and output terminals of the circuit 1-1 using a truth table. When the value A1 of the first input terminal a1 is at a "1" level whereas the value B1 of the second input terminal b1 is at a "0" level, namely, when A1 > B1, the value of the first output terminal c1 takes the level "1". When the value A1 of the terminal a1 is equal to the value B1 of the terminal b1, on the other hand, the value of the terminal d1 takes the level "1". In other words, the output at terminal c1 is "1" when A1 > B1, and the output at terminal d1 is "1" when A1 = B1. Terminals c1, d1 are thus never both at the "1" level. Table 1 also applies to the circuit 1-2. As to the input signals of the circuit 1-2, the signal to be inputted to the terminal a2 is denoted by A2, and the signal to the inputted to the terminal b2 is denoted by B2.

Table 2 enumerates the relations of the logical values of the input and output terminals of the circuit 2-1 using a truth table. In Table 2, when the value at the terminal c2 or d2 is at the "1" level and the value at the terminal c1 is at the "1" level, the value of the terminal i takes the "1" level. If this relation is applied together with Table 1 to the values $A = (A2 \cdot A1)$ and $B = (B2 \cdot B1)$ of the input signal strings, it corresponds to the relation in which $(A2 \cdot A1, B2 \cdot B1) = (11, 00), (11, 01), (11, 10), (10, 00), (10, 01)$ and $(01, 00)$. In other words, only when $A > B$, the value of the terminal i takes the "1" level. Only when the terminals c1 and c2 are at the "0" level and the terminals d1 and d2 are at the "1" level, does the value of the terminal j take the "1" level. This corresponds to the relation in which $(A2 \cdot A1, B2 \cdot B1) = (00, 00), (01, 01), (10, 10)$ and $(11, 11)$, namely, $A = B$.

From the description thus far made, it will be understood that the signals of the states of $A > B$ and $A = B$ are obtained at the terminals i and j by inputting the signal A in the order of minimum to maximum bits to the terminals a1 and a2 and the signal B in the order of minimum to maximum bits to the terminals b1 and b2.

Fig. 3 is a 3-bit comparator circuit constructed of the basic components of Fig. 2. This comparator circuit is constructed by replacing either of the 1-bit comparator circuit 1-1 or 1-2 of the basic comparator circuit BC of Fig. 2 with the 2-bit comparison function. If the first input signal A is inputted such that ordered minimum to maximum bits A1 to A3 are applied to the terminals a1, a2 and a3 via signal lines 11-1, 11-2 and 11-3, respectively, and if the second input signal B is inputted such that ordered minimum to maximum bits B1 to B3 are applied to the terminals b1, b2 and b3 via signal lines 12-1, 12-2 and 12-3, respectively, the magnitude comparison signal and the equality signal of the lower two bits of the signal A and the lower two bits of the signal B obtained by the comparison at the comparator circuit BC are outputted to the signal lines 13-1 and 14-1, respectively. The magnitude comparison signal and the equality signal of the maximum bits A3 and B3 obtained by the comparison at a third comparator circuit 1-3 are outputted to the terminals c3 and d3, respectively. These output signals are inputted to a judging circuit 3-1 which is the same circuit as the judging circuit 2-1. In the circuit 3-1, arithmetic operations are conducted in accordance with Table 2 so that the signals A > B and A = B are obtained at terminals i and j, respectively. Thus, the 3-bit comparator circuit is realized.

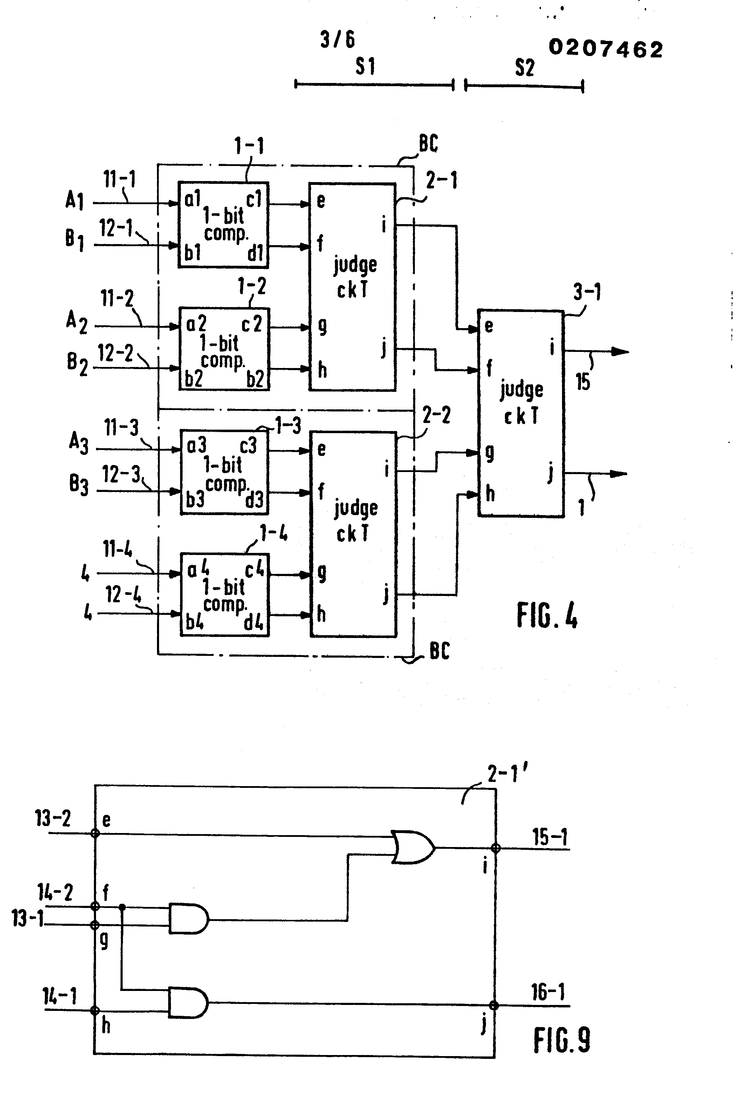

Fig. 4 shows an example in which the circuit of Fig. 3 is expanded to constitute a 4-bit comparator circuit. The illustrated 4-bit comparator contains two basic comparator circuits BC, each of which is the same circuit as shown in Fig. 2. Further, to produce a comparison signal and a equality signal for a pair of 4-bit data, a judging circuit 3-1 is provided at an output stage. This circuit 3-1 is also the same circuit as the circuit 2-1 or 2-2. In this case, only three judging circuits are required. Moreover, an operation of the judging circuit 2-2 can be performed in parallel with that of the judging circuit 2-1 in Fig. 4. According to the comparator circuit shown in Fig. 4, thus, the comparison result can be derived through two judging stages S1 and S2. On the other hand, in the 4-bit comparator circuit of the prior art shown in Fig. 1, the comparison result is derived through three judging stages S1 to S3. Consequently, the comparator circuit of the present invention can operate at a high speed with a minimum delay time.

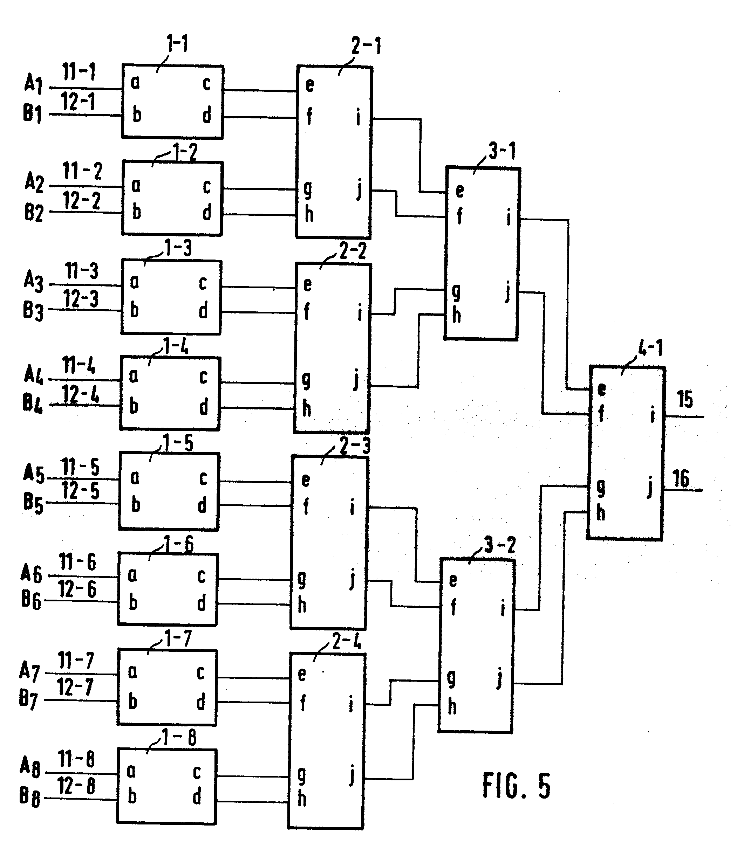

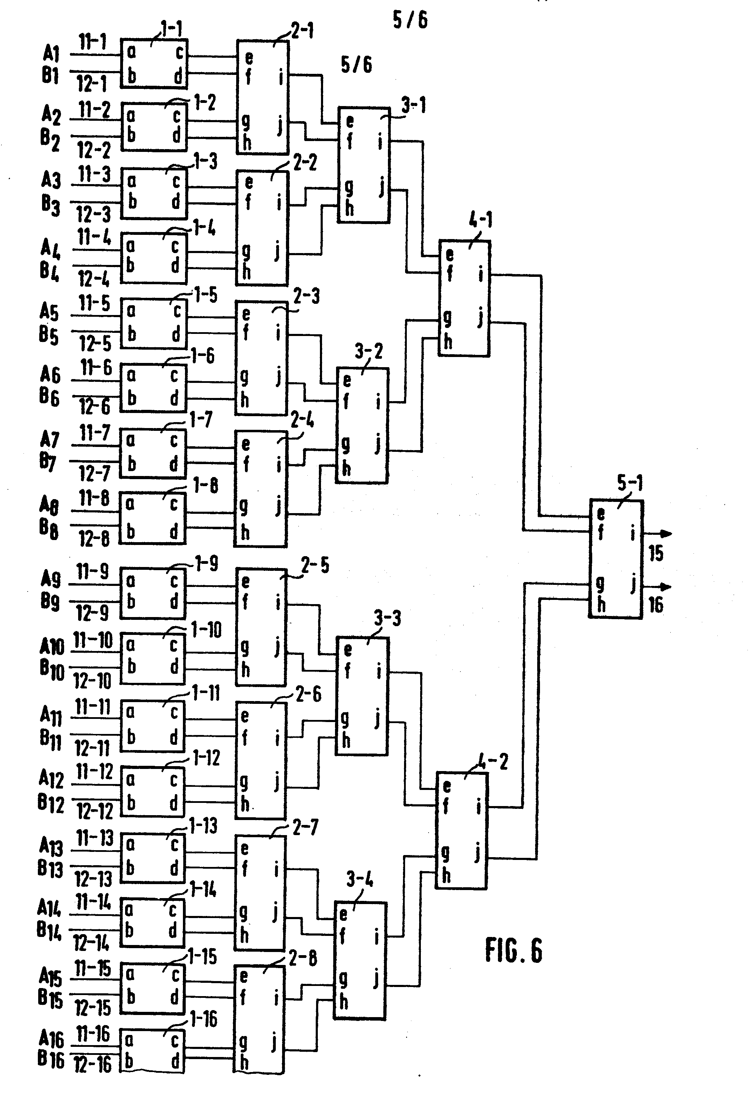

Generally speaking, an N-bit comparator circuit can be easily constructed using the method thus far described, i.e., the method of arranging the judging circuits according to a tournament style. Fig. 5 illustrates an 8-bit comparator circuit of the present invention for comparing an 8-bit data A with an 8-bit data B. In this circuit, eight 1-bit comparator circuits 1-1 to 1-8 and even judging circuits 2-1 to 2-4, 3-1, 3-2 and 4-1 are arranged according to a tournament style. Fig. 6 illustrates a 16-bit comparator circuit in which two 8-bit comparator circuits shown in Fig. 5 are provided in parallel and a judging circuit 5-1 is added to outputs of judging circuits 4-1 and 4-2.

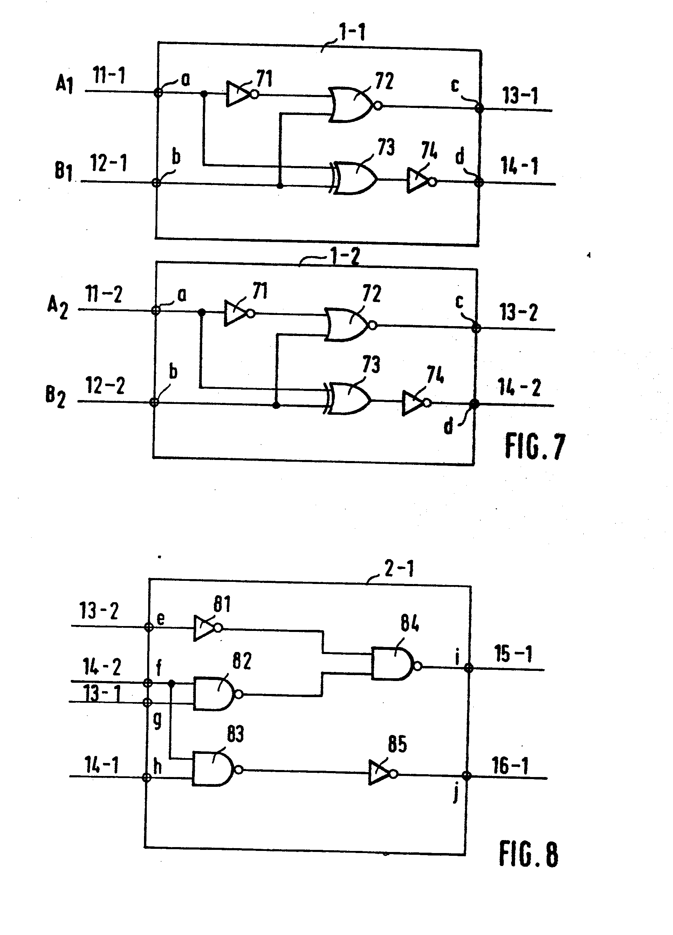

Fig. 7 illustrates detailed circuit diagrams of the first comparator circuit 1-1 and the second comparator circuit 1-2. The circuit 1-1 is the same circuit as the circuit 1-2 and contains an invertor 71 coupled to the input terminal a, an NOR gate 72 coupled to the invertor 71 and the input terminal b, an exclusive OR gate 73 coupled to the terminals a and b and an invertor 74 coupled to the exclusive OR gate 73. The terminals c and d are coupled to an output of the NOR gate 72 and an output of the invertor 74, respectively.

Fig. 8 illustrates a detailed circuit diagram of the judging circuit 2-1. The terminal g is coupled to an NAND gate 84 via an invertor 81. The terminsls f and g are both coupled to an NAND gate 82 whose output is coupled to the NAND gate 84. The terminals f and h are both coupled to an NAND gate 83 whose output is coupled to an invertor 85. The terminals i and j are coupled to an output of the NAND gate 84 and an output of the invertor 85, respectively.

The NOR gate 72 receives $\overline{A}$ and B and produces a level "1" signal only when the signal A is rager than the signal B (e.g. A=1, B=0). The invertor 74 produces a level "1" signal only when the signal A is equal to the signal B (e.g. A=B=1 or A=B=0). On the other hand, the NAND gate 84 produces a level "1" signal only when

$A_{i+1} > B_{i+1}$ or when $A_{i+1} = B_{i+1}$ and $A_i > B_i$. The output of the NAND gate 84 is used as a comparison signal. The invertor 85 produces a level "1" signal only when $A_{i+1} = B_{i+1}$ and $A_i = B_i$. This signal is used as a equality signal. The judging circuit 2-1 may be modified to Fig. 9 in which two AND gates and an OR gate are employed.

The comparator circuit which can be realized as described hereinbefore is characterized in that the increase in the cascade steps of the judging circuit is smaller for a given increase in the bit number than is the case in the prior system. For example, the number of cascade steps of judging circuits required of the 4-bit comparator circuits shown in Fig. 4 is 2. Moreover, the number of cascade steps of judging circuits for 5- to 8-bit comparator circuits is 3. As a result, the drop in the operating speed is far smaller than in the comparator circuit of the prior art as the bit number increases. If a comparison is made between 16-bit digital words, for example, the step number of the judging circuit according to the prior art method shown in Fig. 1 is 15, whereas the step number of the comparator according to the present invention is only 4 as shown in Fig. 6. Thus, the present invention can perform an important role in realizing a high-speed comparator circuit.

The present invention can easily applied to a 32- or 64-bit comparator circuit.

What is Claimed is:

1. A comparator circuit for comparing two digital words of plural bits, comprising: a basic circuit comprising:
(a) two first circuits for comparing bit data of the same bit number of said two digital words and for generating a comparison signal, and (b) a second circuit, responsive to the comparison signals from said two first circuits, for generating a comparison result signal in response to the data supplied thereto;

said basic circuit comprising a two-bit comparator, and said comparator circuit being expandable to form an n-bit comparator by:

(1) replacing said first circuit or circuits with basic circuits; and

(2) replacing the first circuit or circuits of said replacement basic circuits with further basic circuits; and

(3) repeating step (2), until the number of said first circuits which receive bit data of said two digital words is equal to n.

2. A comparator circuit according to claim 1, wherein said bit data are supplied to said first circuits in the order of bit number.

3.   A comparator circuit for comparing two digital words of a plurality of bits comprising:

first, second and third circuits for comparing the bit data of the first, second and third bits of said two digital words and for generating first comparison signals respectively;

a fourth circuit for generating a second comparison signal in response to the data supplied thereto, comparised of said first comparison signals from said first and second circuits; and

a fifth circuit for generating a comparison result signal of said two digital words in response to the first comparison signal from said third circuit and said second comparison signal from said fourth circuit.

4.   A comparator circuit for comparing two digital words of a plurality of bits, comprising:

first, second, third and fourth circuits for comparing the bit data of the first, second, third and fourth bits of said two digital words and for generating first comparison signals, respectively;

fifth and sixth circuits for generating second comparison signals in response to the first comparison signals from said first and second circuits, and third and fourth circuits, respectively; and

a seventh circuit for generating a comparison result signal of said two digital words based upon the second comparison signals from said fifth and sixth circuits.

5. A comparator circuit for comparing two digital words of a plurality of bits comprising first and second basic circuits, each of which comprises a first comparator circuit having first and second input terminals and first and second output terminals for outputting a "1" level at said first output terminal, only in case the value of said first input terminal is higher than that of said second input terminal, and for outputting the "1" level at said second output terminal only in case the values of said first and second input terminals are equal to each other; a second comparator circuit having third and fourth input terminals and third and fourth output terminals corresponding to said first and second input terminals and said first and second output terminals for outputting a "1" level at said third output terminal, only in case the value of said third input terminal is higher than that of said fourth input terminal, and for outputting the "1" level at said fourth output terminal only in case the values of said third and fourth input terminals are equal to each other; and a first judging circuit having fifth, sixth, seventh and eighth input terminals and fifth and sixth output terminals for outputting the "1" level at said fifth output terminal, only either when the value of said fifth input terminal is at the "1" level or when both the values of said sixth and seventh input terminals are at the "1" level, and for outputting the "1" level at said sixth output terminal only when both the values of said sixth and eighth input terminals are at a "1" level, said fifth, sixth, seventh and eighth input terminal being connected with said third, fourth, first and second output terminals, respectively, and a second judging circuit coupled to said fifth and sixth output terminals of said first and second basic circuits and producing a comparison result signal either when the value of the fifth output terminal of said second basic circuit is at the "1" level or when both values of the fifth output terminal of said first basic circuit and the sixth output terminal of said second basic circuit are at the and a plurality of second circuits arranged in a tournament style, the second circuit arranged in a first stage coupled to the first circuits which receive bit data $A_i$, $B_i$ and $A_{i+1}$, $B_{i+1}$, respectively, and produces a third signal when the bit data $A_{i+1}$ is large than $B_{i+1}$ or when the bit data $A_i$ is large than the bit data $B_i$ and when the bit data $A_{i+1}$ is equal to the bit data $B_{i+1}$ and a fourth signal when the bit data $A_i$ is equal to the bit

data $B_i$ and when the bit data $A_{i+1}$ is equal to the bit data $B_{i+1}$, the second circuit or circuits in a second stage to the last stage having the same function as that of the second circuit in the first stage and coupled its inputs to "1" level.

6. A comparator circuit as claimed in claim 5, wherein said second judging circuit further produces an equality signal when both values of the sixth output terminals of said first and second basic circuit are at the level "1".

7. A comparator circuit comprising a plurality of first circuits, each of which receives bit data $A_i$ and $B_i$ of the same bit number of two digital words A and B to be compared with each other and produces a first signal when the bit data $A_i$ is larger than the bit data $B_i$ and a second signal when the bit data $A_i$ is equal to the bit data $B_i$, outputs of a second circuit in a preceding stage and couples its outputs to inputs of a second circuit in a succeeding stage, and a comparison result signal being derived from the second circuit in the last stage.

FIG. 1
(PRIOR ART)

0207462

0207462

FIG. 2

1st comparator circuit

2nd comparator circuit

FIG. 3

FIG. 4

FIG. 9

FIG. 5

FIG. 6

0207462

FIG.7

FIG.8